(19) Europäisches Patentamt
European Patent Office
Office européen des brevets

(11) Veröffentlichungsnummer: **0 501 326 B1**

(12) # EUROPÄISCHE PATENTSCHRIFT

(45) Veröffentlichungstag der Patentschrift: **11.10.95**

(51) Int. Cl.$^{6}$: **A01N 37/36**

(21) Anmeldenummer: **92102914.6**

(22) Anmeldetag: **21.02.92**

(54) **Verwendung von Oximetherderivaten zur Bioregulation bei Pflanzen.**

(30) Priorität: **01.03.91 DE 4106509**

(43) Veröffentlichungstag der Anmeldung:
**02.09.92 Patentblatt 92/36**

(45) Bekanntmachung des Hinweises auf die Patenterteilung:
**11.10.95 Patentblatt 95/41**

(84) Benannte Vertragsstaaten:
**BE DE DK ES FR GB IT NL**

(56) Entgegenhaltungen:
**EP-A- 0 182 407**
**EP-A- 0 243 834**
**US-A- 4 584 014**

**CHEMICAL ABSTRACTS, vol. 75, no. 3, 19. Juli 1971, Columbus, OH (US); T. TERAJI, Seite 422, Nr. 19955k**

**CHEMICAL ABSTRACTS, vol. 75, no. 5, 02. August 1971, Columbus, OH (US); T. TERAJI, Seite 460, Nr. 35434v**

(73) Patentinhaber: **BASF Aktiengesellschaft**
**Carl-Bosch-Strasse 38**
**D-67063 Ludwigshafen (DE)**

(72) Erfinder: **Kirchner, Juergen**
**Weinheimer Strasse 70**
**W-6806 Viernheim (DE)**
Erfinder: **Schmidt, Oskar, Dr.**
**Viernheimer Weg 31**
**W-6900 Heidelberg (DE)**
Erfinder: **Grossmann, Klaus, Dr.**
**Wilhelm Busch-Strasse 5**
**W-6703 Limburgerhof (DE)**
Erfinder: **Rademacher, Wilhelm, Dr.**
**Austrasse 1**
**W-6703 Limburgerhof (DE)**
Erfinder: **Hepp, Michael, Dr.**
**Im Steg 38**
**W-6802 Ladenburg (DE)**
Erfinder: **Zierke, Thomas, Dr.**
**Akazienstrasse 12**
**W-6737 Boehl-Iggelheim (DE)**

EP 0 501 326 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung von Oximetherderivaten der allgemeinen Formel I,

$$R^1R^2C=NO\text{-}CH_2\text{-}COOR^3 \qquad \text{I}$$

in der die Substituenten folgende Bedeutung haben:

$R^1$ und $R^2$ unabhängig voneinander Wasserstoff oder $C_1$-$C_6$-Alkyl oder gemeinsam mit dem C-Atom an das sie gebunden sind $C_5$-$C_6$-Cycloalkyl;

$R^3$ Wasserstoff oder $C_1$-$C_6$-Alkyl,

zur Bioregulation bei Pflanzen.

Außerdem betrifft die Erfindung Verfahren zur Bioregulation bei Pflanzen.

Aus der Literatur sind Oximetherderivate der Formel I als Zwischenprodukte zur Herstellung von Bioregulatoren bekannt (EP-A 243 834). Eine biologische Wirkung dieser Zwischenprodukte wurde jedoch nicht gefunden. Aus dieser Literatur ist ebenfalls bekannt, daß Alkoxycarbonylmethyl-ester der Verbindungen I bioregulatorisch wirksam sind.

Aufgabe der vorliegenden Erfindung waren neue wirksame Bioregulatoren.

Demgemäß wurde gefunden, daß die eingangs definierten Oximetherderivate I sich zur Bioregulation bei Pflanzen eignen.

Die Herstellung der Oximetherderivate I ist auf verschiedenen Wegen möglich.

Man erhält die Verbindungen beispielsweise in an sich bekannter Weise dadurch, daß man eine Carbonylverbindung der allgemeinen Formel II mit Hydroxylamin-O-essigsäure oder deren Ester III gemäß der folgenden Reaktionsgleichung kondensiert.

$$\underset{\text{II}}{R^1R^2C{=}O} \quad + \quad \underset{\text{III}}{H_2NO{-}CH_2{-}COOR^3} \quad \longrightarrow \quad \underset{\text{I}}{R^1R^2C{=}NO{-}CH_2{-}COOR^3}$$

(Vecchio et al., Atti. soc. peloritana Sci. fis. Mat. e Nat., 4, 163-82 (1957-58), entspricht C.A. 54, 5524 d)

Ein weiteres Verfahren besteht darin, daß man Oxim der allgemeinen Formel IV in ebenfalls bekannter Weise mit einem alpha-Halogen-essigsäurederivatder allgemeinen Formel V gemäß der folgenden Reaktionsgleichung umsetzt.

$$\underset{\text{IV}}{R^1R^2C{=}NOH} \quad + \quad \underset{\text{V}}{Hal{-}CH_2{-}COOR^3} \quad \longrightarrow \quad \underset{\text{I}}{R^1R^2C{=}NO{-}CH_2{-}COOR^3}$$

Hal in der Formel V steht für ein Halgenatom, insbesondere für ein Chlor- oder ein Bromatom (Zorina et al., Zh. Obshch. Khim., 52, 223-4 (1982), entspricht C.A. 96, 142 207d).

Im Hinblick auf die bestimmungsgemäße Verwendung der Verbindungen I zur Bioregulation bei Pflanzen kommen als Substituenten die Folgenden in Betracht:

$R^1$ und $R^2$ unabhängig voneinander Wasserstoff oder

$C_1$-$C_6$-Alkyl wie Methyl, Ethyl, Propyl, 1-Methylethyl, Butyl, 1-Methylpropyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl,

oder

$R^1$ und $R^2$ gemeinsam mit dem C-Atom an das sie gebunden sind $C_5$-$C_6$-Cycloalkyl wie Cyclopentyl und Cyclohexyl;

Im Hinblick auf ihre Verwendung zur Bioregulation bei Pflanzen sind insbesondere solche Oximetherderivate der Formel I bevorzugt, in denen

$R^1$ für Wasserstoff oder Methyl steht;

oder $R^1$ und $R^2$ gemeinsam mit dem C-Atom an das sie gebunden sind Cyclohexyl bedeutet.

Außerdem werden Verbindungen I bevorzugt, in denen $R^3$ Wasserstoff bedeutet.

Beispiele für insbesondere bevorzugte Oximetherderivate der allgemeinen Formel I sind in der folgenden Tabelle aufgeführt.

Tabelle:

$$R^1R^2C{=}NO{-}CH_2{-}COOR^3 \qquad I$$

| Nr. | $R^1$ | $R^2$ | $R^3$ |
|---|---|---|---|
| 1 | H | $CH_3$ | H |
| 2 | H | $CH_3$ | $CH_3$ |
| 3 | H | $CH_3$ | $CH_2CH_3$ |
| 4 | H | $CH_3$ | $CH_2CH_2CH_3$ |
| 5 | H | $CH_3$ | $CH(CH_3)2$ |
| 6 | H | $CH_3$ | $C(CH_3)3$ |
| 7 | H | $CH_3$ | $(CH_2)_5CH_3$ |
| 8 | H | $CH_2CH_3$ | H |
| 9 | H | $CH_2CH_3$ | $CH_3$ |
| 10 | H | $CH_2CH_3$ | $CH_2CH_3$ |
| 11 | H | $CH_2CH_3$ | $CH_2CH_2CH_3$ |
| 12 | H | $CH_2CH_3$ | $CH(CH_3)2$ |
| 13 | H | $CH_2CH_3$ | $C(CH_3)3$ |
| 14 | H | $CH_2CH_3$ | $(CH_2)_5CH_3$ |
| 15 | $CH_3$ | $CH_3$ | H |
| 16 | $CH_3$ | $CH_3$ | $CH_3$ |
| 17 | $CH_3$ | $CH_3$ | $CH_2CH_3$ |
| 18 | $CH_3$ | $CH_3$ | $CH_2CH_2CH_3$ |
| 19 | $CH_3$ | $CH_3$ | $CH(CH_3)2$ |
| 20 | $CH_3$ | $CH_3$ | $C(CH_3)3$ |
| 21 | $CH_3$ | $CH_3$ | $(CH_2)_5CH_3$ |
| 22 | $CH_3$ | $CH_2CH_3$ | H |
| 23 | $CH_3$ | $CH_2CH_3$ | $CH_3$ |
| 24 | $CH_3$ | $CH_2CH_3$ | $CH_2CH_3$ |
| 25 | $CH_3$ | $CH_2CH_3$ | $CH_2CH_2CH_3$ |
| 26 | $CH_3$ | $CH_2CH_3$ | $CH(CH_3)2$ |
| 27 | $CH_3$ | $CH_2CH_3$ | $C(CH_3)3$ |
| 28 | $CH_3$ | $CH_2CH_3$ | $(CH_2)_5CH_3$ |
| 29 | $-CH_2CH_2CH_2CH_2CH_2-$ | | H |
| 30 | $-CH_2CH_2CH_2CH_2CH_2-$ | | $CH_3$ |
| 31 | $-CH_2CH_2CH_2CH_2CH_2-$ | | $CH_2CH_3$ |
| 32 | $-CH_2CH_2CH_2CH_2CH_2-$ | | $CH_2CH_2CH_3$ |
| 33 | $-CH_2CH_2CH_2CH_2CH_2-$ | | $CH(CH_3)2$ |
| 34 | $-CH_2CH_2CH_2CH_2CH_2-$ | | $C(CH_3)3$ |
| 35 | $-CH_2CH_2CH_2CH_2CH_2-$ | | $(CH_2)5CH_3$ |

Die Verbindungen der Formel können praktisch alle Entwicklungsstadien einer Pflanze verschiedenartig beeinflussen und werden deshalb als Bioregulatoren eingesetzt.

Die erfindungsgemäß zu verwendenden Wirkstoffe können den Kulturpflanzen sowohl vom Samen her (als Saatgutbeizmittel) als auch über den Boden, d.h. durch die Wurzel sowie - besonders bevorzugt - durch Spritzung über das Blatt zugeführt werden. Bei Pflanzenteilen kann die Wirkstoffzuführung sowohl durch Tauch- oder Spritzbehandlung erfolgen, als auch über das Versorgungswasser, z.B. bei Schnittblumen.

Infolge der hohen Pflanzenverträglichkeit kann die Aufwandmenge stark variiert werden.

Bei der Saatgutbehandlung werden im allgemeinen Wirkstoffmengen von 0,001 bis 50 g je Kilogramm Saatgut, vorzugsweise 0,01 bis 10 g benötigt. Für die Blatt- und Bodenbehandlung sind im allgemeinen Gaben von 0,001 bis 10 kg/ha, bevorzugt 0,01 bis 1 kg/ha als ausreichend zu betrachten. Für die Behandlung von Pflanzenteilen werden im allgemeinen Wirkstoffmengen von 0,001 mg bis 50 g je Kilogramm Pflanzenteilen, bevorzugt 0,01 mg bis 1 g benötigt. Zum Frischhalten von Schnittblumen betragen die Wirkstoffkonzentrationen im Versorgungswasser im allgemeinen 0,001 bis 10 g/l, bevorzugt 0,05 bis 1 g/l.

Die Formulierungen bzw. die daraus hergestellten gebrauchsfertigen Zubereitungen wie Lösungen, Emulsionen, Suspensionen, Pulver, Stäube, Pasten oder Granulate werden in bekannter Weise angewendet, beispielsweise im Vorauflaufverfahren, im Nachauflaufverfahren, als Beizmittel oder durch Einmischen in das für Schnittblumen zur Versorgung dienende Wasser.

Beispiele für Formulierung sind:

I. 20 Gew.-Teile der Verbindungen des Beispiels 5 werden in 3 Gew.-Teilen des Natriumsalzes der Diisobutylnaphthalinsulfonsäure, 17 Gew.-Teilen des Natriumsalzes einer Ligninsulfonsäure aus einer Sulfitablauge und 60 Gew.-Teilen pulverförmigem Kieselsäuregel gut vermischt und in einer Hammermühle vermahlen. Durch feines Verteilen der Mischung in 20 000 Gew.-Teilen Wasser enthält man eine Spritzbrühe, die 0,1 Gew.-% des Wirkstoffs enthält.

II. 3 Gew.-Teile der Verbindung des Beispiels 15 werden mit 97 Gew.-Teilen feinteiligem Kaolin innig vermischt. Man erhält auf diese Weise ein Stäubemittel, das 3 Gew.-% des Wirkstoffs enthält.

III. 30 Gew.-Teile der Verbindung des Beispiels 15 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise ein Aufbereitung des Wirkstoffs mit guter Haftfähigkeit.

IV. 40 Gew.-Teile der Verbindung des Beispiels 15 werden mit 10 Teilen Natriumsalz eines Phenolsulfonsäure-Harnstoff-Formaldehyd-Kondensats, 2 Teilen Kieselgel und 48 Teilen Wasser innig vermischt. Man erhält eine stabile wäßrige Dispersion. Durch Verdünnen mit 100 000 Gew.-Teilen Wasser erhält man eine wäßrige Dispersion, die 0,04 Gew.-% Wirkstoff enthält.

V. 20 Teile der Verbindung des Beispiels 15 werden mit 2 Teilen Calciumsalz der Dodecylbenzolsulfonsäure, 8 Teilen Fettalkohol-Polyglykolether, 2 Teilen Natriumsalz eines PhenolsulfonsäureHarnstoff-Formaldehyd-Kondensats und 68 Teilen eines paraffinischen Mineralöls innig vermischt. Man erhält eine stabile ölige Dispersion.

VI. Man vermischt 90 Gew.-Teile der Verbindung des Beispiels 29 mit 10 Gew.-Teilen N-Methyl-alpha-pyrrolidon und erhält eine Lösung, die zur Anwendung in Form kleinster Tropfen geeignet ist.

VII. 20 Gew.-Teile der Verbindung des Beispiels 15 werden in einer Mischung gelöst, die aus 80 Gew.-Teilen Xylol, 10 Gew.-Teilen des Anlagerungsproduktes von 8 bis 10 mol Ethylenoxid an 1 mol Ölsäure-N-monoethanolamid, 5 Gew.-Teilen Calciumsalz der Dodecylbenzolsulfonsäure und 5 Gew.-Teilen des Anlagerungsproduktes von 40 mol Ethylenoxid an 1 mol Ricinusöl besteht. Durch Ausgießen und feines Verteilen der Lösung in 100 000 Gew.-Teilen Wasser erhält man eine wäßrige Dispersion, die 0,02 Gew.-% des Wirkstoffs enthält.

VIII. 20 Gew.-Teile der Verbindung des Beispiels 29 werden in einer Mischung gelöst, die aus 40 Gew.-Teilen Cyclohexanon, 30 Gew.-Teilen Isobutanol, 20 Gew.-Teilen des Anlagerungsproduktes von 7 mol Ethylenoxid an 1 mol Isooctylphenol und 10 Gew.-Teilen des Anlagerungsproduktes von 40 mol Ethylenoxid an 1 mol Ricinusöl besteht. Durch Eingießen und feines Verteilen der Lösung in 100 000 Gew.-Teilen Wasser erhält man eine wäßrige Dispersion, die 0,02 Gew.-% des Wirkstoffs enthält.

IX 20 Gew.-Teile der Verbindung des Beispiels 29 werden in einer Mischung gelöst, die aus 25 Gew.-Teilen Cyclohexanol, 65 Gew.-Teilen einer Mineralölfraktion vom Siedepunkt 210 bis 280 °C und 10 Gewichtsanteilen des Anlagerungsproduktes von 40 mol Ethylenoxid an 1 mol Ricinusöl besteht. Durch Eingießen und feines Verteilen der Lösung in 100 000 Gew.-Teilen Wasser erhält man eine wäßrige Dispersion, die 0,02 Gew.-% des Wirkstoffs enthält.

Die erfindungsgemäßen Mittel können in diesen Anwendungsformen auch zusammen mit anderen Wirkstoffen vorliegen, wie z.B. Herbiziden, Insektiziden, anderen Bioregulatoren, Fungiziden und Bakteriziden oder auch mit Düngemitteln vermischt und ausgebracht werden. Durch das Vermischen mit anderen Bioregulatoren treten auch synergistische Effekte auf, d.h. die Wirksamkeit des Kombinationsproduktes ist größer als die addierten Wirksamkeiten der Einzelkomponenten.

Die Erfindung betrifft insbesondere die Verwendung von Oximetherverbindungen I zur Senkung des endogenen Ethylenspiegels in Pflanzen.

Ethylen zählt zu den Pflanzenhormonen und ist an der Regulation vielfältiger Wachstums-, Entwicklungs- und Stoffwechselprozesse beteiligt. Alterungsvorgänge, Abwurf von Blättern, Blüten und Früchten, Blüten- und Wurzelbildung, Sproß- und Wurzelwachstum, Keimungsprozesse, die Entwicklung von Seitenknospen und die Abgabe von Sekundärstoffen aus der Pflanze sind Beispiele für Prozesse, die durch natürlicherweise von Pflanzen gebildetes oder durch von außen einwirkendes Ethylen beeinflußt werden (Biochemistry and Physiology of Plant Hormones, Springer-Verlag New York 1989, pp. 228-254). Die Bildung von Ethylen in Pflanzen wird jedoch nicht nur von Faktoren der Entwicklung bestimmt sondern ganz wesentlich auch von verschiedenen Umwelteinflüssen, z.B. Trockenheit, Hitze, Kälte, Staunässe, mechanische Verwundung, Schädlingsbefall, Chemikalien usw., welche in der Regel über erhöhte Ethylenproduktion ein spezifisches Reaktionsmuster der Pflanze, wie z.B. Alterungsvorgänge oder Abwurf von Blüten oder Früchten hervorrufen (BioScience 34/4, 1984, pp. 234-238). Über eine Senkung des endogenen Ethylenspiegels kann somit eine Vielzahl physiologischer Prozesse in Pflanzen reguliert werden. Die Möglichkeiten der praktischen Nutzanwendung dieses Effektes sind entsprechend vielfältig. Ertrags- und Qualitätserhöhungen durch verminderten Blüten- und Fruchtfall bzw. aufgrund einer verlängerten Vegetationsphase, verbesserte Lagerfähigkeit von Früchten oder anderen Pflanzenteilen, sowie die Verbesserung der Haltbarkeit von Schnittblumen seien als Beispiele genannt.

Es ist bekannt, daß verschiedene Verbindungen bezüglich des pflanzlichen Ethylenhaushalts regulierend wirken. Die Möglichkeit eines umfassenden praktischen Einsatzes war bislang jedoch nicht gegeben. Hindernisse waren z.B. im Falle des Aminoethoxyvinylglycins die aufwendige Herstellung und die Humantoxizität, bei Aminooxyessigsäure die Phytotoxizität und die relativ unspezifische Wirkung, 2,5 Norbornadien besitzt große Flüchtigkeit und einen unangenehmen Eigengeruch. Cobaltsalze sowie die in einem gewissen Umfang als Frischhaltemittel für einige Schnittblumenarten eingesetzten Silbersalze gelten als gesundheitsgefährdend und umweltbelastend. Zusammenfassende Darstellungen geben Ann. Rev. Plant Physiol. 1984, pp. 155-189 und BioScience 34/4, 1984, pp 234-238.

Für Oximether anderer Art wurde gezeigt (Plant Physiol 90, 1989, pp 291-295), daß diese an die für Naphthylphthalamidsäure spezifischen Bindungsstellen in pflanzlichen Membranen binden und somit den Transport des Pflanzenhormons Auxin beeinträchtigen. Verbindungen mit diesem Wirkungsprinzip sind geeignet, den vom Auxintransport abhängigen Geotropismus der Wurzeln von Kresse zu stören (Plant Physiol. 66, 1980, pp 1190-1195). Wie Tabelle A zeigt, wurde gefunden, daß dies für Verbindungen der Formel nicht zutrifft und sie somit trotz struktureller Ähnlichkeiten einem anderen Wirkungstyp zuzurechnen sind.

Anwendungsbeispiele:

Als Vergleichssubstanzen dienten die Verbindungen A (Aminooxyessigsäure), B ($(CH_3)_2C=NO-CH_2CO_2CH_2CO_2CH_3$, Beispiel 1 aus EP-A 243 834) und C (Naphthylphthalamidsäure).

1. Der Einfluß von Wirkstoffen auf den Wurzelgeotropismus bei Kresse wurde folgendermaßen getestet: Inerte Quader von 1 x 1 x 4,5 cm wurden mit Filterpapier umwickelt. Diese Träger wurden in Petrischalen mit jeweils 5 ml 0,01 mM, 0,1 mM und 1 mM Wirkstofflösung gelegt. Gelöst waren die Wirkstoffe jeweils in wäßriger Pufferlösung (HEPES*-NaOH, 10 mM, pH 8). Jeweils 10 Kressesamen wurden auf dem Filterpapier entlang des Trägerrandes so ausgerichtet, daß ihr Wurzelpol zum Rand zeigte. Nach ca. 48 Stunden Inkubation bei 25 °C und Dunkelheit in einer feuchten Kammer wurde das geotrope Verhalten der Wurzlen bonitiert. Bei nicht gestörtem Geotropismus wuchsen die Wurzeln an der Seite des Trägers senkrecht nach unten, bei gestörtem Geotropismus jedoch in Richtung des bereits im Samen angelegten Wurzelpols annähernd waagrecht über den Rand hinaus.

Tabelle A

| Wirkstoff | Wurzelgeotropismus bei Kresse |
|---|---|
| C | gestört |
| Beispiel 15 | nicht gestört |
| Beispiel 29 | nicht gestört |

2. Hemmung trockenstreßinduzierten Ethylens bei Gerste

In Töpfe von ca. 12,5 cm Durchmesser und ca. 500 ml Volumen, wurden 80 Gerstesamen auf

* 10 m mol N-2-Hydroxyethylpiperazin-N'-2-ethansulfonsäure (HEPES), mit 2n NaOH-Lösung auf pH 8 eingestellt.

Torfkultursubstrat ausgelegt und bei ausreichender Nährstoffversorgung unter standardisierten Bedingungen (21 °C, Tageslänge 12 Stunden, Luftfeuchte 70 %) kultiviert. Nach 7 Tagen wurden die Blätter der jungen Pflanzen mit Wirkstofflösung (4 mg Wirkstoff/Topf) besprüht. Gelöst wurden die Wirkstoffe in wäßriger Pufferlösung (MES**-NaOH, 50 mM, pH 6,1). Außerdem wurde der Spritzlösung ein Netzmittel (1-Oktylphenylhexaglycolether) zugesetzt. Drei Tage nach Behandlung wurden die Pflanzen abgeschnitten, je 5 Stück gewogen und im offenen Trockenschrank bei 30 °C inkubiert, bis 10 % Gewichtsverlust eingetreten waren. Dieser Trockenstreß führt bei unbehandelten Pflanzen zu einer starken Erhöhung der Ethylenbio-Synthese (Plant Physiol. 68, 1981, pp. 594-596). Die gestreßten Pflanzen wurden in Glaszylinder überführt, welche mit Gummisepten gasdicht verschlossen wurden. Nach ca. 4 Stunden Inkubation bei Dunkelheilt wurde mit Hilfe einer gasdichten Spritze jeweils 1 ml Luft aus den Glaszylindern entnommen und der Ethylengehalt gaschromatographisch bestimmt.

Tabelle B

| Wirkstoff | % Hemmung gegenüber Kontrolle | Pflanzenverträglichkeit* |
|---|---|---|
| A | 61 % | - |
| B | 21 % | + |
| Beispiel 15 | 44 % | + |
| Beispiel 29 | 53 % | + |

*Die Bonitur erfolgte drei Tage nach Behandlung, hierbei bedeutet +: gute und -: schlechte Verträglichkeit.

3. Hemmung der Ethylenbildung bei Raps-Blattscheibchen

Aus Blättern von ca. 4 Wochen alten Rapspflanzen wurden Scheibchen ausgestanzt und mit 1 ml Wirkstofflösung, enthaltend 20 µg Wirkstoff, für ca. 16 Stunden vorinkubiert, dann in ein Röhrchen überführt und mit einem Gummiseptum gasdicht verschlossen. Nach ca. 4 Stunden wurde die gebildete Ethylenmenge gaschromatographisch bestimmt. Gelöst wurden die Wirkstoffe in wäßriger Pufferlösung (MES-NaOH, 50 mM, pH 6,1).

Tabelle C

| Wirkstoff | % Hemmung gegenüber Kontrolle |
|---|---|
| A | 79 % |
| B | 62 % |
| Beispiel 15 | 64 % |
| Beispiel 29 | 71 % |

4. Hemmung der Ethylenbildung in Sonnenblumen-Zellsuspensionen

Zellsuspensionskulturen der Sonnenblume weisen einen im Vergleich zur Pflanze identischen Biosyntheseweg des Phytohormons Ethylen auf (Tabelle D). Sie eignen sich deshalb als Testsystem zur Auffindung neuer Hemmstoffe der Ethylenbiosynthese (Plant Physiology 87, 510-513, 1988).

Tabelle D

| Mittel, enthaltend Wirkstoff Nr. | Konzentration (M) | Hemmung der Ethylenbildung 4 Tage nach Behandlung (% zur Kontrolle) |
|---|---|---|
| Unbehandelt | - | 0 |
| Beispiel 15 | $10^{-5}$ | 79 |
| B | $10^{-5}$ | 60 |

** 50 m mol 2-(N-Morpholino)ethansulfonsäure (MES), mit 2n NaOH-Lösung auf pH 6,1 eingestellt.

Das erfindungsgemäße Mittel führt zu einer stärkeren Hemmung der Ethylenbildung als das Vergleichsmittel

5. Verzögerung der Blütenwelke bei Schnittblumen (Nelken)

Frisch geschnittene Nelken aus kommerziellem Anbau wurden in 80 ml Wirkstofflösung, enthaltend 0,625 µmol Wirkstoff/ml (sofern nicht anders angegeben), eingestellt. Von den Nelken verbrauchtes Wasser wurde täglich ersetzt. Gelöst wurden die Wirkstoffe in wäßriger Pufferlösung (HEPES-NaOH, 10 mM, pH 7,5). Weiterhin wurde der Wirkstofflösung das Bakterizid Chloramphenicol (50 µg/ml) zugesetzt. Die Tabelle E zeigt den prozentualen Anteil verwelkter Nelken an dem Tag, an dem alle Blüten der Kontrolle verwelkt waren.

Tabelle E

| Wirkstoff | % verwelkte Nelken nach 12 Tagen |
|---|---|
| Kontrolle | 100 % |
| Ag + (0,125 µmol/ml) | 0 % |
| A | 0 % |
| B | 0 % |
| Beispiel 15 | 0 % |

## Patentansprüche

**1.** Verwendung von Oximetherderivaten der allgemeinen Formel I,

$$R^1R^2C=NO\text{-}CH_2\text{-}COOR^3 \qquad I$$

in der die Substituenten folgende Bedeutung haben:

$R^1$ und $R^2$ unabhängig voneinander Wasserstoff oder $C_1$-$C_6$-Alkyl oder gemeinsam mit dem C-Atom an das sie gebunden sind $C_5$-$C_6$-Cycloalkyl;

$R^3$ Wasserstoff oder $C_1$-$C_6$-Alkyl,

zur Senkung des endogenen Ethylenspiegels in Pflanzen.

**2.** Verfahren zur Bioregulation bei Pflanzen, dadurch gekennzeichnet, daß man die Pflanzen und/oder ihren Lebensraum mit einer zur Senkung des endogenen Ethylenspiegels wirksamen Menge eines Oximetherderivats der allgemeinen Formel I gemäß Anspruch 1 behandelt.

## Claims

**1.** Use of an oxime ether derivative of the general formula I

$$R^1R^2C=NO\text{-}CH_2\text{-}COOR^3 \qquad I$$

where $R^1$ and $R^2$ independently of one another are each hydrogen or $C_1$-$C_6$-alkyl or, together with the carbon atom to which they are bonded, are $C_5$- or $C_6$-cycloalkyl and $R^3$ is hydrogen or $C_1$-$C_6$-alkyl, for lowering the endogenous ethylene level in plants.

**2.** A method for bioregulation in plants, wherein the plants and/or their habitat is or are treated with an amount, effective for lowering the ethylene level, of an oxime ether derivative of the formula I as claimed in claim 1.

## Revendications

**1.** Utilisation, pour l'abaissement du niveau d'éthylène endogène dans les plantes, de dérivés d'oximéther de formule générale I

$$R^1R^2C=NO\text{-}CH_2\text{-}COOR^3 \qquad I$$

dans laquelle les substituants ont la signification suivante :
$R^1$ et $R^2$, indépendamment l'un de l'autre, hydrogène ou alkyle en C1-C6 ou ensemble, avec l'atome C auquel ils sont liés, cycloalkyle en C5-C6
$R^3$ hydrogène ou alkyle en C1-C6,
pour l'abaissement du niveau d'éthylène endogène dans les plantes.

**2.** Procédé de biorégulation chez les plantes, caractérisé par le fait que l'on traite les plantes et/ou leur biotope avec une quantité, efficace pour l'abaissement du niveau d'éthylène, d'un dérivé d'oximéther de formule générale I selon la revendication 1.